# EUROPÄISCHE PATENTSCHRIFT

(11) **EP 0 635 350 B1**
(45) Veröffentlichungstag und Bekanntmachung des Hinweises auf die Patenterteilung: **15.10.1997**
(21) Anmeldenummer: 94111021.5
(22) Anmeldetag: 15.07.1994
(51) Int. Cl.: B29C 45/28

(54) **Pneumatische Steuervorrichtung für Heisskanalnadelventile für Spritzgiesswerkzeuge**
Pneumatic control device for hot runner needle valves for injection moulds
Dispositif de commande pneumatique pour des valves à aiguille de canal chauffant pour moules d'injection

(30) Priorität: 20.07.1993 DE 4324275
(43) Veröffentlichungstag der Anmeldung: 25.01.1995
(73) Patentinhaber: INCOE CORPORATION, Troy, Michigan 48099 (US)
(72) Erfinder: Gauler, Kurt, D-64390 Erzhausen (DE)
(74) Vertreter: Boecker, Joachim, Dr.-Ing.

(56) Entgegenhaltungen:
- DE-A- 3 336 203
- FR-A- 2 641 227
- GB-A- 2 098 535
- PATENT ABSTRACTS OF JAPAN vol. 16, no. 274 (M-1267) 19. Juni 1992 & JP-A-04 067 923 (JAPAN STEEL WORKS)
- KUNSTSTOFFE, Bd.76, Nr.7, Juli 1986, MUNCHEN DE Seiten 571 - 575 RITTO 'Auslegen und Konstruieren von Heisskanalwerkzeugen'

## Beschreibung

Die Erfindung betrifft eine pneumatische Steuervorrichtung für Heißkanalnadelventile für Spritzgießwerkzeuge gemäß dem Oberbegriff des Anspruches 1. Eine derartige Einrichtung ist aus der DE-33 36 203 bekannt.

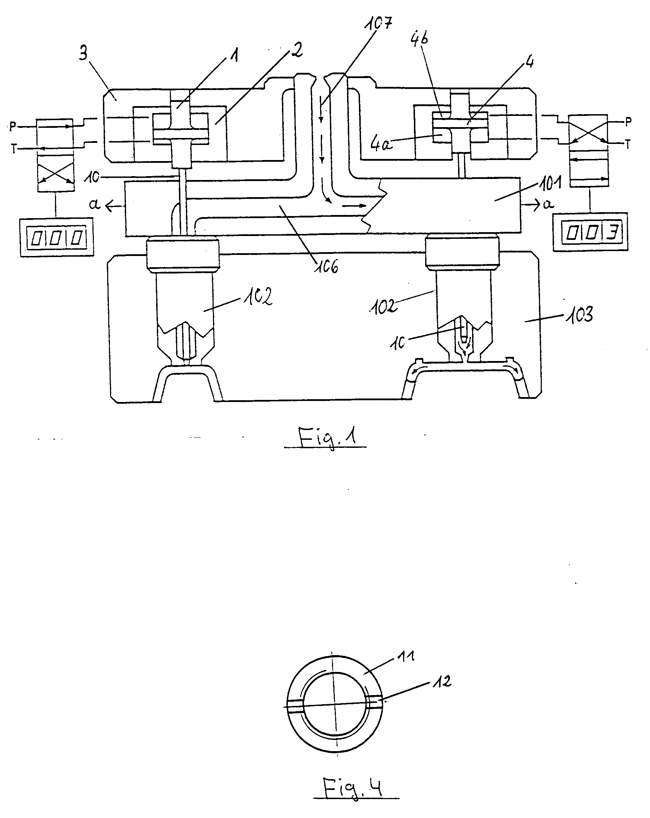

Beim Kunststoffspritzgießen wird die Kunststoffschmelze über Angußbuchsen, die in den Innenraum einer Gießform münden, in die Gießform eingespritzt. Dieser bekannte Stand der Technik ist in Figur 1 vereinfacht dargestellt. Dabei ist es bekannt, zwei oder mehr Angußbuchsen 102 gleichzeitig zu beschicken, wobei die von der Spritzgußmaschine kommende Schmelze 107 über über Kanäle 106 eines beheizten Verteilerblocks 103 auf die einzelnen Angußbuchsen 102 verteilt wird. Die Angußbuchsen sind in Bohrungen einer Düsenplatte 103 eingesetzt, die im Sinne der Figur 1 den oberen Teil einer zweiteiligen Gießform bildet. Im Spritzgießwerkzeug können mehrere gleiche Gießformen oder verschiedene Gießformen (Familienwerkzeug) angeordnet sein, an die je eine Angußbuchse angeschlossen ist. Bei großen Werkstücken können auch zwei oder mehrere Angußbuchsen an den Gießraum desselben Gießstückes angeschlossen sein.

Eine Möglichkeit zur Steuerung des Schmelzenflusses besteht in der Verwendung von Nadelventilen, wobei die Ventilnadel 10 durch den Verteilerblock 101 in die Angußbuchse 102 eingeführt wird und von einer Steuervorrichtung 1,2,3 in ihrer achsialen Lage gesteuert wird (sogenannte Ventilanschnittsysteme). Die Steuervorrichtung kann grundsätzlich hydraulisch oder pneumatisch arbeiten. Bei der Herstellung bestimmter Kunststoffprodukte, wie z.B. Produkten für den medizinischen Bereich, scheiden hydraulische Steuervorrichtungen aus, da jede Möglichkeit eines Kontakt der Gießschmelze bzw. der Gießstücke mit Öl vermieden werden muß.

Da sich beim Gießvorgang der Verteilerblock stärker erwärmt als die Steuervorrichtung und deren Halterung, findet infolge Wärmedehnung eine Verlagerung der Seiten des Verteilerblocks 1 in Richtung der Pfeile a relativ zu den Steuervorrichtungen statt. Dadurch wirken Querkräfte auf den Steuerkolben, die zu ernsten Dichtungsproblemen zwischen Steuerkolben und Zylinderwand führen. Auch infolge von Fertigungstoleranzen kann es zu Fluchtungsfehlern zwischen der Steuerkolben-Achse und der Längsachse des Ventilnadelkanals im Verteilerblock 101 kommen, die ebenfalls zu einem ungleichmäßigen Andruck der Dichtung zwischen Steuerkolben und Steuerzylinder führen.

Neben der Beeinträchtigung und Beschädigung der Dichtung kann es auch zu einer Verbiegung der Nadel kommen. Der Paßsitz der Nadel durch die Dichtungsbuchse 105 (Figur 2) ist äußerst empfindlich gegen Querkräfte. Dabei ist zu beachten, daß die Nadel beim Gießbetrieb innerhalb von 20 - 30 Sekunden zwei axiale Verschiebungen (Öffnen und Schließen der Form) ausführt. Die Dichtbuchse 105 mit einer hochempfindlichen Beschichtung versehen, um die erforderliche Dichtung zu erreichen.

Ein weiterer Nachteil der herkömmlichen Steuervorrichtungen, bei denen das Betätigungsgas für den Kolben radial durch die Wand des Steuerzylinders zugeführt wird, besteht darin, daß mehrere Dichtungen zwischen der Zylindermantelaußenwand und dem Zylinderaufnahmekörper erforderlich sind. Der Einbau des Steuerzylinders mit diesen Dichtungen in den Zylinderaufnahmekörper gestaltet sich schwierig, und es muß sehr darauf geachtet werden, daß die Dichtungen beim Einbau nicht beschädigt werden. Um den Einbau zu erleichtern, ist es üblich, die äußere Zylinderwand in Achsrichtung mehrfach abgestuft auszubilden. Dies stellt jedoch einen erhöhten Fertigungsaufwand bei der Herstellung des Zylinders dar. Dieser Nachteil ist unabhängig davon, ob die Ventilnadel durch einen Verteilerblock geführt wird und Fluchtungsfehler in der oben genannten Weise zu Seitenkräften führen.

Aus der FR-A-2 641 227 ist eine Angußbuchse bekannt, die als Einzeldüse in ein Werkzeug eingesetzt ist und ohne Zwischenschaltung eines Verteilerblocks direkt von der Spritzgußmaschine beschickt wird. Die Betätigung der Nadel der Angußbuchse erfolgt über einen Kolben, der in einem Zylinder der Angußbuchse verschiebbar angeordnet ist. Die Zuführung des Druckmittels zur Betätigung dieses Zylinders erfolgt über Kanäle, die an der dem Werkzeug zugewandten Stirnseite des den Kolben aufnehmenden Blockes der Angußbuchse in ringförmige Nuten münden, über die Druckmittel von außen zugeführt bzw. nach außen abgeführt wird.

Der Erfindung liegt die Aufgabe zugrunde, eine pneumatische Steuervorrichtung für Heißkanalnadelventile für Spritzgießwerkzeuge der eingangs genannten Art zu entwickeln, bei welcher die vorgenannten Fluchtungs- und Dichtungsprobleme vermieden werden. Ferner soll durch die Erfindung eine Steuervorrichtung der genannten Art geschaffen werden, bei der der komplizierte Aufbau der Außenwand des Steuerzylinders vermieden wird und der Einbau des Steuerzylinders in den Zylinderaufnahmekörper wesentlich erleichtert wird.

Zur Lösung dieser Aufgabe wird eine pneumatische Steuervorrichtung für Heißkanalnadelventile für Spritzgießwerkzeuge gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Durch die Erfindung werden somit nicht nur die insbesondere bei der Verwendung von Verteilerblocks auftretenden Fluchtungsfehler im Längskanal der Ventilnadel auf einfach Weise praktisch vollständig ausgeglichen, sondern es wird auch ein Steuerzylinder geschaffen, der bedeutend einfacher und billiger herstellbar ist und sich schneller und ohne jede Gefahr einer Beschädigung für die Kanalkammer- Dichtungen dank deren stirnseitiger Anordnung einbauen läßt.

Anhand der in den Figuren gezeigten Ausführungsbeispiele soll die Erfindung näher erläutert werden. Es zeigen
- Figur 1: die grundsätzliche Anordnung einer pneumatischen Steuervorrichtung für Heißkanalnadelventile für Spritzgießwerkzeuge nach dem Stande der Technik,
- Figur 2: ein erstes Aufführungsbeispiel einer pneumatischen Steuervorrichtung gemäß der Erfindung,
- Figur 3: eine gegenüber Figur 2 geringfügig abgewandelte Ausführungsform gemäß der Erfindung,
- Figur 4: eine Draufsicht in Achsrichtung auf das Ende der die Ventilnadel aufnehmenden Hülse des Steuerkolbens.

Figur 2 zeigt ein Ausführungsbeispiel der Erfindung. Die Figur zeigt einen Teil des Zylinderaufnahmekörpers 3 und einen Teil des Verteilerblocks 101, durch den die von der Steuervorrichtung zu steuernde Ventilnadel 10 verläuft.

Der Zylinderaufnahmekörper 3 ist mit einer zylindrischen Bohrung oder Ausnehmung 31 versehen, in welche der im Durchmesser etwas kleinere Steuerzylinder 2 eingesetzt ist. In dem Steuerzylinder 2 ist ein im Sinne der Figur 2 von oben einführbarer axial verschieblicher Steuerkolben 1 angeordnet. Der Steuerkolben 1 bildet mit der unteren Stirnwand des Steuerzylinders 2 eine erste Zylinderkammer 4a, und mit dem von oben einsetzbaren Zylinderdeckel 5 eine zweite Zylinderkammer 4b. Der Zylinderdeckel 5 ist durch eine Schulter 5a und durch einen Sprengring 7 fest im Steuerzylinder 2 positioniert. In der in Figur 2 gezeigten Lage des Steuerkolbens hat die obere Zylinderkammer 4b ihr kleinstmögliches Volumen.

Der Steuerzylinder 2 ist an seiner unteren Stirnseite 21 mit drei zur Zylinderlängsachse b konzentrischen Ringnuten 22 versehen, in denen Dichtungsringe 26a - 26c eingesetzt sind. Über diese Dichtungsringe liegt die Stirnseite 21 des Steuerzylinders 2 an der vom Boden der Ausnehnung 31 gebildeten Anlagefläche 32 an. Ein zur Dichtung ausreichender Anpreßdruck wird durch die Befestigungsschrauben 23 hergestellt. Zwischen je zwei benachbarten konzentrischen Dichtungsnuten ist in der Stirnseite 21 des Steuerzylinder 2 je eine ringförmige und vorzugsweise zur Zylinderlängsachse b konzentrische flache Nut vorhanden, die im weiteren als Kanalkammern 24a, 24b bezeichnet werden. Von der Kanalkammer 24a führt ein Druckgaskanal 25a in die im Sinne der Zeichnung untere Zylinderkammer 4a. Von der Kanalkammer 24b führt ein im wesentlichen parallel zur Zylinderlängsachse b verlaufender Druckgaskanal 25b durch die Zylindermantelwand des Steuerzylinders zu der oberen Zylinderkammer 4b. Jede der ringförmigen Kanalkammern 24a, 24b steht in pneumatischer Verbindung mit je einer in dem Zylinderaufnahmekörper 3 angeordneten Druckgasleitung 33a, 33b für die Zuführung und Abführung von Druckgas.

Wenn bei der Steuervorrichtung gemäß der Erfindung der Verteilerblock 101 sich infolge stärkerer Erwärmung in Richtung des Pfeiles a relativ zum Steuerzylinder 3 verschiebt, dann kann der Steuerzylinder 2 zusammen mit dem Steuerkolben 1 dank der schwimmenden Lagerung des Steuerzylinders und dank des Spiels c zwischen der Zylinderaußenwand und der Innenwand der Ausnehmung 31 im Zylinderaufnahmekörper 3 dieser Bewegung folgen.

Das bedeutet, daß auf die verschiedenen Dichtungen 6 zwischen dem Steuerkolben 1 und der Zylinderwand beziehungsweise dem Zylinderdeckel sowie zwischen dem Zylinderdeckel und der Zylinderwand keine Querkräfte zur Einwirkung kommen, so daß die Dichtungen durch die Wärmedehnung des Verteilerblocks oder infolge von Fertigungstoleranzen nicht zu stark und ungleichmäßig belastet werden. Selbstverständlich darf die von den Befestigungsschrauben 23 ausgeübte Anpreßkraft nicht zu hoch gewählt werden.

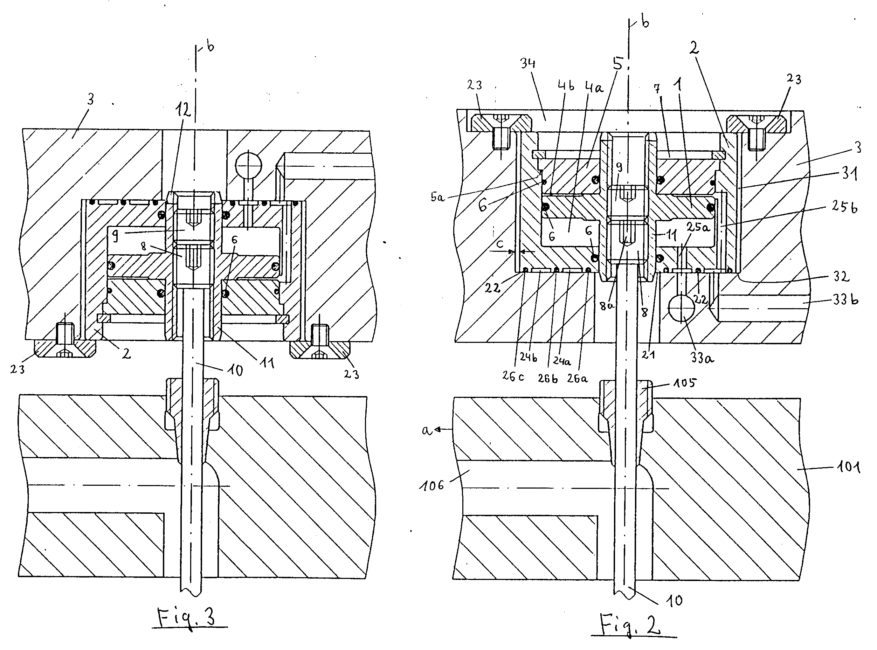

Das in Figur 3 gezeigte Ausführungsbeispiel unterscheidet sich von dem gemäß Figur 2 im wesentlichen nur dadurch, daß der Zylinderaufnahmekörper 3 und der Steuerzylinder 2 um 180° gedreht angeordnet ist. Der Vorteil dieser Ausführungsform besteht darin, daß die Befestigungsschrauben 23 zur Festsetzung des Steuerzylinders 2 zwischen dem Zylinderaufnahmekörper 3 und dem Verteilerblock 101 zu liegen kommen. Da sie hier nicht stören, besteht kein Bedarf zur Versenkung dieser Schrauben in einer Ausnehmung 34 im Zylinderaufnahmekörper (vergleiche mit Figur 2). Dadurch ist die Höhe des Zylinderaufnahmekörper 3 und damit die Gesamthöhe der Anordnung in Figur 3 etwas kleiner als in Figur 2.

Ein besonderes Problem stellt die Befestigung und Justierung der Ventilnadel 10 dar. Auch dieses Problem wird gemäß Anspruch 9 auf einfache Weise gelöst: Die Kolbenstange des Steuerkolbens 1 ist innerhalb des Steuerzylinders 2 als hohle Hülse 11 mit Innengewinde ausgebildet. Die Ventilnadel 10 ist an ihrem oberen Ende durch Verschraubung oder auf andere Weise fest mit einer Verstellschraube 8 versehen, die in die Hülse 11 einschraubbar ist. Zu diesem Zweck ist die Schraube auf der der Ventilnadel abgewandten Seite mit einer Imbusvertiefung, z.B. einem Vierkant oder Sechskant, versehen, in die im Sinne der Figuren 2 und 3 von oben ein Imbusschlüssel eingesetzt werden kann, mittels dessen die Ventilnadel durch Drehung axial verschoben werden kann. Um zu verhindern, daß sich bei dieser Drehung der drehbar im Steuerzylinder 2 angeordnete Steuerkolben 1 mitdreht, ist die Hülse 11 an ihrem oberen Ende mit einer Eingriffsvorrichtung, zum Beispiel mit zwei diametral gegenüberliegenden Schlitzen 12 (siehe auch Figur 4), für ein entsprechendes Haltewerkzeug versehen. Durch Einsetzen dieses Werkzeuges, z.B. eines Schraubenzieher oder eines Spezialschlüssels, kann dann beim Drehen der Verstellschraube 8 ein Mitdrehen des Steuerkolbens 1 verhindert werden. Über der Verstellschraube 8 ist eine Konterschraube 9, die ebenfalls als Imbusschraube ausgeführt sein kann, angeordnet, mit der die Verstellschraube 8 nach Einstellung der Ventilnadel gegen Drehung blockiert werden kann. Der Einbau und Ausbau der Nadel ist somit ohne eine Demontage der Zylinder möglich. Die Justierung kann zum Schluß erfolgen, nachdem der Zylinder komplett montiert ist.

Der Justiervorgang mit der vorgenannten Einrichtung gestaltet sich sehr einfach in folgenden Weise: Zunächst wird der Kolben in die im Sinne der Figuren 2 und 3 unterste Position gebracht. Dann wird die Ventilnadel 10 durch Drehen der Verstellschraube 8 so weit in Richtung Gießwerkzeug gedreht, bis die Spitze der Ventilnadel gegen dem im vorderen (unteren) Ende der Angußbuchse 102 befindlichen Anschlag anschlägt. Die Lage dieses Anschlages hängt von der Art der verwendeten Angußbuchse ab. Dann wird die Verstellschraube 8 geringfügig, zum Beispiel eine Umdrehung, zurückgedreht und anschließend wird die Konterschraube 9 zur Fixierung der Lage der Verstellschraube in der Hülse 11 eingeschraubt. Während dieses gesamten Vorganges wird der Steuerkolben 1 in der oben beschriebenen Weise am Mitdrehen gehindert.

Es versteht sich, daß die in den Figuren 2 bis 4 gezeigte Ausführungsformen der Erfindung in vielfacher Weise variiert werden können.

Entscheidend ist die senkrecht zur Kolbenlängsachse vorhandene schwimmende Lagerung des Steuerzylinders 2 in dem Zylinderaufnahmekörper 3. Dieses Merkmal verbietet den Anschluß der Zylinderkammern 4a und 4b an Druckgaskanäle, die die Zylinderwand in herkömmlicher Weise radial durchdringen (siehe Figur 1). Die Mindestgröße des Spiels c wird durch die zu erwartenden Fluchtungsfehler infolge von Fertigungstoleranzen und/oder Wärmedehnung bestimmt. Nach oben ist das Spiel c praktisch nicht begrenzt. Es muß sich bei der Aufnahmeöffnung 31 Zylinderaufnahmekörpers auch nicht um eine zylindrische Bohrung oder Ausnehmung handeln. Entscheidend ist allein, die Bildung der Anlagefläche 32 für die Stirnseite 21 des Steuerzylinders 2 sowie das Vorhandensein einer Andruckmöglichkeit (23) des Steuerzylinders gegen die Anlagefläche 32.

Die Kanalkammern 24a,24b sowie die Nuten 22 zur Aufnahme der Dichtungen 26a-26c können anstelle an der Stirnseite 21 des Steuerzylinders auch auf der Anlagefläche 32 des Zylinderaufnahmekörpers 3 angeordnet sein.

Zur Bildung der Kanalkammern 24a und 24b sind keine konzentrisch zur Kolbenachse angeordnete Dichtungen erforderlich. Es genügt im Prinzip, daß auf der Stirnseite 21 des Steuerzylinders 2 zwei Bereiche vorhanden sind, die durch in sich geschlossene Dichtungen zwei von der übrigen Stirnseitenfläche abgegrenzte Bereiche schaffen, in denen dann durch Ausbildung einer Vertiefung je eine Kanalkammer geschaffen wird. Das bedeutet, daß auch die Kanalkammern nicht ringförmig um die Kolbenachse ausgeführt zu sein brauchen. Vielmehr könnten beispielsweise auch zwei von je einer Dichtung umgebene kreisscheibenförmige Vertiefungen irgendwo auf der Stirnseite 31 angeordnet sein, von denen dann einerseits Druckgaskanäle 25a, 25b durch die Wand des Steuerzylinders zu den beiden Zylinderkammern 4a, 4b führen und in die andererseits die im Zylinderaufnahmekörper 3 vorhandenen Druckgasleitungen 33a, 33b münden. Der Vorteil der in Figur 2 gezeigten ringförmigen Dichtungen und ringförmigen Kanalkammern besteht darin, daß beim Zusammenbau nicht auf die Drehwinkelstellung des Steuerzylinder im Verhältnis zum Zylinderaufnahmekörper geachtet zu werden braucht.

Wenn die Dichtungen (26a bis 26c) weit genug aus der Stirnfläche 21 herausragen, ist zur Bildung einer Kanalkammer eine Vertiefung in dieser Stirnfläche nicht zwingend erforderlich erforderlich.

Selbstverständlich brauchen die Druckgaskanäle 25a und 25b nicht parallel zur Kolbenachse zu verlaufen, obwohl dies die zweckmäßigste Ausführungsform sein dürfte. Entscheidend ist nur, daß sie die jeweilige Kanalkammer mit der jeweiligen Zylinderkammer pneumatisch verbinden.

Die in den Figur 2 und 4 gezeigte formschlüssige Halteanordnung zur Aufnahme eines Haltewerkzeuges kann anders als in Form von zwei diametral gegenüberliegenden Schlitzen 12 ausgebildet sein.

Die Vorrichtung zum Anpressen des Steuerzylinders 2 gegen die Anlagefläche 32 des Zylinderaufnahmekörpers 3 kann anders als durch direkte Einwirkung der Befestigungsschrauben 23 erfolgen, beispielsweise durch einen übertragenden Ring, der mit dem Zylinderaufnahmekörper 3 verschraubbar ist.

Selbverständlich können auch mehr als zwei Kanalkammern mit entsprechenden Druckgaskanälen im Steuerzylinder und Druckgasleitungen im Zylinderaufnahmekörper vorhanden sein. Dabei können dann zwei oder mehr Kanalkammern an dieselbe Zylinderkammer angeschlossen sein.

## Patentansprüche

1. Pneumatische Steuervorrichtung für Heißkanalnadelventile für Spritzgießwerkzeuge, welche Steuervorrichtung aus einem die Ventilnadel (10) tragenden Steuerkolben (1), einem den Steuerkolben aufnehmenden Steuerzylinder (2) und einem den Steuerzylinder aufnehmenden Zylinderaufnahmekörper (3) besteht, wobei der Steuerzylinder (1) mit Druckgaskanälen (25a,25b) für die Zuführung und Abführung vom Druckgas zu beziehungsweise aus den vom Steuerkolben getrennten Zylinderkammern (4a,4b) versehen ist,
**dadurch gekennzeichnet**,
a) daß der Steuerzylinder (2) mit einer seiner Stirnseiten (21) über Dichtungen (26a bis 26c) gegen eine Anlagefläche (32) des Zylinderaufnahmekörpers (3) anpreßbar ist,
b) daß die genannten Dichtungen (26a bis 26c) mindestens zwei voneinander getrennte Kanalkammern (24a,24b) zwischen der Anlagefläche (32) des Zylinderaufnahmekörpers (3) und der Stirnseite (21) des Steuerzylinders(2) abgrenzen,
c) daß der Steuerzylinder (2) auf der genannten Anlagefläche (32) senkrecht zur Kolbenlängsachse (b) verschiebbar ist,
d) daß in jede Kanalkammer (24a,24b) eine durch den Zylinderaufnahmekörper führende Druckgasleitung (33a,33b) für die Zuführung und Abführung vom Druckgas mündet
e) und daß von jeder Kanalkammer (24a,24b) ein Druckgaskanal (25a,25b) durch die Wandung des Steuerzylinders (2) zu einer Zylinderkammer (4a,4b) führt.

2. Pneumatische Steuervorrichtung nach Anspruch 1, **dadurch gekennzeichnet**, daß die Anlagefläche (32) des Zylinderaufnahmekörpers (3) durch eine Ausnehmung (31) oder sonstige Aufnahmeöffnung in dem Zylinderaufnahmekörper (3) gebildet wird, deren Innendurchmesser zur Schaffung eines Verschiebespiels (c) größer als der Außendurchmesser des Steuerzylinders (2) ist.

3. Pneumatische Steuervorrichtung nach Anspruch 1 oder 2, **dadurch gekennzeichnet**, daß die Anpressung des Steuerzylinders (2) gegen die Anlagefläche (32) durch eine am Zylinderaufnahmekörper (3) angebrachte Befestigungsvorrichtung, zum Beispiel Befestigungsschrauben (23), herstellbar ist.

4. Pneumatische Steuervorrichtung nach einem der vorhergehenden Ansprüche, **dadurch gekennzeichnet**, daß die Kanalkammern (24a,24b) als Vertiefungen in der Stirnseite (21) des Steuerzylinders oder der Anlagefläche (32) des Zylinderaufnahmekörpers ausgebildet sind.

5. Pneumatische Steuervorrichtung nach einem der vorhergehenden Ansprüche, **dadurch gekennzeichnet**, daß die Dichtungen (26a - 26c) zwischen der Stirnseite (21) des Steuerzylinders (2) und der Anlagefläche (32) des Zylinderaufnahmekörper (3) ringförmig ausgebildet sind und vorzugsweise konzentrisch zur Zylinderlängsachse (b) liegen.

6. Pneumatische Steuervorrichtung nach einem der vorhergehenden Ansprüche, **dadurch gekennzeichnet**, daß die Kanalkammern (24a, 24b) als vorzugsweise ringförmige und zur Zylinderlängsachse (b) konzentrische Vertiefungen ausgebildet sind.

7. Pneumatische Steuervorrichtung nach einem der vorhergehenden Ansprüche, **dadurch gekennzeichnet**, daß die Dichtungen (26a - 26c) durch zu einem Ring geschlossene Dichtungsstreifen gebildet werden, die in entsprechende in der Stirnseite (21) des Steuerzylinders oder in der Anlagefläche (31) des Zylinderaufnahmekörpers angeordnete Nuten (22) eingelegt sind und je eine Kanalkammerwand bilden.

8. Pneumatische Steuervorrichtung nach einem der vorhergehenden Ansprüche, **dadurch gekennzeichnet**, daß der Querschnitt der Dichtungen (26a - 26c) ringförmig ist.

9. Pneumatische Steuervorrichtung nach einem der vorhergehenden Ansprüche, **dadurch gekennzeichnet**, daß die Kolbenstange des Steuerzylinders als eine hohle, mit Innengewinde versehene Hülse (11) ausgebildet ist, in welche die Ventilnadel (10) mittels einer an ihrem Ende befestigten Verstellschraube (8) einschraubbar ist, und daß die Hülse (11) zumindest an ihrem bei zusammengebauter Gießvorrichtung zugänglichen Ende mit einer Vorrichtung (12) versehen ist, in die ein Werkzeug einsetzbar ist, mit welchem der Steuerkolben (1) am Mitdrehen gehindert werden kann, wenn die achsiale Lage der Ventilnadel (10) durch Drehen in der Hülse (11) verstellt wird.

## Claims

1. Pneumatic control device for hot runner needle valves for injection moulds which control device comprises a control piston (1) supporting the valve needle (10), a control cylinder (2) accommodating said control piston (2), and a cylinder receptacle body (3) accommodating said control cylinder, said control cylinder (1) being provided with pressure gas channels (25a, 25b) for the supply and discharge of pressure gas to and from, respectively, the cylinder chambers (4a, 4b), separated by said control piston,
**characterized** in that
a) said control cylinder (2) is adapted to be pressed with one of its end surfaces (21) via sealings (26a to 26c) against an abutment surface (32) of the cylinder receptacle body (3),
b) that said sealings (26a to 26c) form at least two mutually separated channel chambers (24a, 24b) between said abutment surface (32) of said cylinder receptacle body (3) and said end surface (21) of the control cylinder (2),
c) that said control cylinder (2) is adapted to be moved on said abutment surface (32) perpendicularly to the longitudinal axis (b) of the piston,
d) that each channel chamber (24a, 24b) is connected to a pressure gas conduit (33a, 33b) for the supply and discharge of pressure gas,
e) and that each channel chamber (24a, 24b) is connected to one of the cylinder chambers (4a, 4b) via a pressure gas channel (25a, 25b) passing through the wall of the control cylinder (2).

2. Pneumatic control device according to claim 1, **characterized** in that the abutment surface (32) of the cylinder receptacle body (3) is formed by a recess (31) or some other receptacle opening in the cylinder receptacle body (3) the inner diameter of which is larger than the outer diameter of the control cylinder (2) to allow a clearance (c) for lateral movement.

3. Pneumatic control device according to claim 1 or 2, **characterized** in that the contact pressure of the control cylinder (2) against the abutment surface (32) is adapted to be brought about by a fastening device, for example fastening screws (23), attached to the cylinder receptacle body (3).

4. Pneumatic control device according to any of the preceding claims, **characterized** in that the channel chambers (24a, 24b) are formed by recesses on the end surface (21) of the control cylinder or on the abutment surface (32) of the cylinder receptacle body.

5. Pneumatic control device according to any of the preceding claims, **characterized** in that the sealings (26a to 26c) between the end surface (21) of the control cylinder (2) and the abutment surface (32) of the cylinder receptacle body (3) are of circular shape and are preferably arranged concentrically in relation to the longitudinal axis (b) of the cylinder.

6. Pneumatic control device according to any of the preceding claims, **characterized** in that the channel chambers (24a, 24b) are preferably formed as annular recesses concentrically arranged in relation to the longitudinal axis (b) of the cylinder.

7. Pneumatic control device according to any of the preceding claims, **characterized** in that the sealings (26a to 26c) are formed by sealing strips closed into loops which are inserted into corresponding slots (22) in the end surface (21) of the control cylinder or the abutment surface (31) of the cylinder receptacle body such that each sealing ring forms a wall of a channel chamber.

8. Pneumatic control device according to any of the preceding claims, **characterized** in that cross-section of the sealings (26a to 26c) is annular.

9. Pneumatic control device according to any of the preceding claims, **characterized** in that the piston rod of the control cylinder is formed as a hollow sleeve (11) with internal screw thread into which the valve needle (10) is adapted to be screwed into by means of an adjustment screw (8) attached to its end, and that the sleeve (11) is provided with a device (12) on at least that one of its ends which is accessible when the molding device is assembled, which device (12) is adapted to accommodate a tool which prevents the control cylinder (1) from rotating when the axial position of the needle valve (10) is adjusted by rotating the sleeve (11).

## Revendications

1. Dispositif pneumatique de commande pour des soupapes à pointeau de canal chaud pour des outils de moulage par injection, lequel dispositif de commande est constitué d'un piston (1) de commande portant le pointeau (10) de la valve, d'un cylindre (2) de commande recevant le piston de commande et d'un corps (3) recevant le cylindre de commande, le cylindre (1) de commande étant muni de canaux (25a, 25b) de gaz sous pression pour l'envoi et l'évacuation de gaz sous pression à destination respectivement en provenance des chambres (4a, 4b) des cylindres séparés du piston de commande,
caractérisé en ce que
a) le cylindre (2) de commande peut être appliqué par l'une de ses faces frontales (21) par l'intermédiaire de garnitures (26a à 26c) d'étanchéité sur une surface (32) d'application du corps (3) de réception du cylindre,
b) lesdites garnitures (26a à 26c) d'étanchéité délimitent deux chambres (24a, 24b) de canal séparées l'une de l'autre entre la surface (32) d'application du corps (3) de réception du cylindre et la face frontale (21) du cylindre (2) de commande,
c) le cylindre (2) de commande peut coulisser sur ladite surface (32) d'application perpendiculairement à l'axe (b) longitudinal du piston,
d) une conduite (33a, 33b) de gaz sous pression passant dans le corps de réception du cylindre pour l'envoi et l'évacuation du gaz sous pression débouche dans chaque chambre (24a, 24b) de canal,
e) et un canal (25a, 25b) de gaz sous pression conduit à travers la paroi du cylindre (2) de commande à une chambre (4a, 4b) de cylindre à partir de chaque chambre (24a, 24b) de canal.

2. Dispositif pneumatique de commande suivant la revendication 1, caractérisé en ce que la surface (32) d'application du corps (3) de réception du cylindre est formée par un évidement (31) ou par une autre ouverture de réception dans le corps (3) de réception du cylindre, dont le diamètre intérieur est, afin de ménager un jeu (c) de coulissement, plus grand que le diamètre extérieur du cylindre (2) de commande.

3. Dispositif pneumatique de commande suivant la revendication 1 ou 2, caractérisé en ce que la pression du cylindre (2) de commande contre la surface (32) d'application peut être établie par un dispositif de fixation, par exemple par des vis (23) de fixation, mises en place sur le corps (3) de réception du cylindre.

4. Dispositif pneumatique de commande suivant l'une des revendications précédentes, caractérisé en ce que les chambres (24a, 24b) de canal sont formées de cavités dans la face frontale (21) du cylindre de commande ou de la surface (32) d'application du corps de réception du cylindre.

5. Dispositif pneumatique de commande suivant l'une des revendications précédentes, caractérisé en ce que les garnitures (26a à 26c) d'étanchéité entre la face (21) frontale du cylindre (2) de commande et la surface (32) d'application du corps (3) de réception du cylindre sont de forme annulaire et sont de préférence concentriques par rapport à l'axe (b) longitudinal du cylindre.

6. Dispositif pneumatique de commande suivant l'une des revendications précédentes, caractérisé en ce que les chambres (24a, 24b) de canal sont formées de cavités, de préférence annulaires et concentriques par rapport à l'axe (b) longitudinal du cylindre.

7. Dispositif pneumatique de commande suivant l'une des revendications précédentes, caractérisé en ce que les garnitures (26a à 26c) d'étanchéité sont formées de rubans d'étanchéité, qui sont fermés en un anneau et qui sont insérés dans des rainures (22) correspondantes ménagées dans la face (21) frontale du cylindre de commande ou dans la surface (31) d'application du corps de réception du cylindre et qui forment chacun une paroi de chambre de canal.

8. Dispositif pneumatique de commande suivant l'une des revendications précédentes, caractérisé en ce que la section transversale des garnitures (26a à 26b) d'étanchéité est annulaire.

9. Dispositif pneumatique de commande suivant l'une des revendications précédentes, caractérisé en ce que la tige de piston du cylindre de commande est formée d'une douille (11) creuse, qui comporte un taraudage et dans laquelle le pointeau (10) de soupape peut être vissé au moyen d'une vis (8) de déplacement fixée à son extrémité et la douille (11) est munie, au moins à son extrémité qui est accessible lorsque le dispositif de coulée est assemblé, d'un dispositif (12), dans lequel un outil peut être inséré, le piston (1) de commande pouvant être empêché de tourner par l'outil, lorsque la position axiale du pointeau (10) de soupape est réglée par rotation dans la douille (11).
